# FASCICULE DE BREVET EUROPEEN

(11) **EP 0 697 934 B1**
(45) Date de publication et mention de la délivrance du brevet: **04.10.2000**
(21) Numéro de dépôt: 95912283.9
(22) Date de dépôt: 03.03.1995
(51) Int. Cl.: B23D 51/12

(54) **MONTURE DE SCIE**
GATTERRAHMEN
SAW FRAME

(30) Priorité: 03.03.1994 FR 9402476
(43) Date de publication de la demande: 28.02.1996
(73) Titulaire: FACOM, Société dite:, 91423 Morangis Cédex (FR)
(72) Inventeur: GRAYO, Lucien, Roger, F-28260 Annet (FR)
(74) Mandataire: Jacobson, Claude
(86) Numéro de dépôt international: FR9500256
(87) Numéro de publication internationale: WO9523667

(56) Documents cités:
- EP-A- 0 022 351
- DE-A- 2 016 309
- GB-A- 191 105
- GB-A- 356 031
- US-A- 1 806 702
- US-A- 2 539 796
- US-A- 3 822 731
- US-A- 4 376 456

## Description

La présente invention est relative à une monture de scie du type décrit dans le préambule de la revendication 1, voir US-A 2 539 796.

Dans des montures de scie connues de ce type, décrites par exemple dans les documents US-A-2 539 796, EP-A-0 022 351, GB-A-356 031 et GB-A-191 105, le ressort taré permet de connaître la tension de la lame, mais l'utilisateur peut dépasser très largement les tensions maximales prévues, ce qui peut se révéler dangereux.

L'invention a pour but de fournir des moyens économiques et fiables permettant d'exercer facilement une tension prédéterminée précise sur la lame, en garantissant le non-dépassement de cette tension.

A cet effet, l'invention a pour objet une monture du type précité, caractérisée par la partie caractérisante dans la revendication 1.

La monture de scie suivant l'invention peut comporter une ou plusieurs des caractéristiques décrites dans les revendications 2 à 10.

L'invention a également pour objet une scie à main comprenant une monture de scie telle que définie ci-dessus, et une lame tendue entre lesdits organes avant et arrière.

Un exemple de réalisation de l'invention va maintenant être décrit en regard des dessins annexés, sur lesquels :
- la Figure 1 représente une scie à main selon l'invention;
- la Figure 2 est une vue de côté d'une pièce d'archet de la monture de cette scie;
- la Figure 3 est une coupe prise suivant la ligne III-III de la Figure 2;
- la Figure 4 est une vue partielle en perspective de la poignée de la monture de scie;
- la Figure 5 est une coupe longitudinale partielle de la poignée montrant le mécanisme de mise en tension, l'organe de commande n'étant pas coupé;
- la Figure 6 est une coupe longitudinale de l'organe de commande du mécanisme de mise en tension; et
- la Figure 7 est une vue de côté de l'organe de commande, prise suivant la flèche VII de la Figure 6.

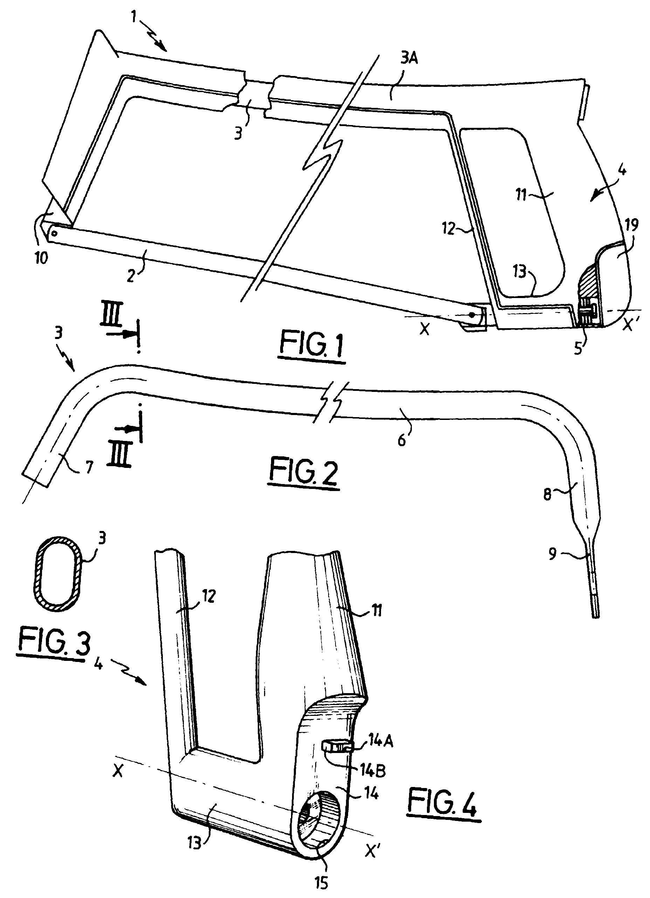

La Figure 1 montre une monture de scie désignée par la référence générale 1, sur laquelle est montée une lame 2. Cette monture 1, de forme générale en U inversé à branches divergentes, est constituée d'un archet 3 métallique dont la partie arrière est solidaire d'une poignée 4 qui incorpore un mécanisme de mise en tension 5. On supposera la monture orientée comme représenté, avec la lame en bas.

L'archet 3 (Figures 2 et 3) est constitué à partir d'un tube creux 6 en acier à section ronde et possède lui-même une forme en U inversé à branches divergentes. La longueur de cet archet est grande par rapport à celles de ses deux branches avant 7 et arrière 8. Cet archet 3 présente sur la majeure partie de sa longueur, sur l'âme du U, un contre-cintrage à concavité tournée vers le haut, visible sur la Figure 2. De plus, comme on le voit sur la Figure 3, à l'emplacement des deux coudes au moins, la section de l'archet est quelque peu aplatie latéralement de façon à avoir une forme ovale avec son grand axe vertical. Ceci augmente la rigidité de l'archet lorsque la lame est mise en tension.

La longueur de la branche 7 est environ la moitié de celle de la branche 8. Sur sa moitié inférieure, la branche 8 est totalement aplatie selon un plan perpendiculaire au plan général de l'archet 3, pour former un plat 9 percé d'un trou. Au bout de la branche 7 est fixé un embout porte-lame avant 10 en "Zamak".

La Figure 1 montre que l'archet 3 est enrobé dans une enveloppe 3A en matériau plastique, par exemple en polyamide. Cette enveloppe épouse la forme générale de l'archet 3 et laisse ainsi visible le contre-cintrage. La poignée 4, d'une forme adaptée pour être facilement préhensible par un opérateur, est venue de matière avec cette enveloppe 3A.

On voit sur les Figures 1 et 4 que cette poignée 4 est constituée de trois branches; deux branches 11 et 12 sensiblement parallèles, et une branche 13 reliant les extrémités inférieures des branches 11 et 12. La branche 11, aisément préhensible par un opérateur, incorpore la branche 8 de l'archet 3. La branche 12, sensiblement plate, se trouve en avant de la branche 11. Ces deux branches présentent à peu près la même inclinaison que celle de la branche 8 de l'archet. La branche 13, sensiblement cylindrique et d'axe X-X' passant par l'axe du trou de l'archet 3, est légèrement inclinée vers le haut et vers l'arrière.

La Figure 4 montre également que la partie inférieure de la branche 11 a un méplat 14 contenu dans un plan perpendiculaire à l'axe X-X'. Ce méplat 14 se prolonge vers le haut par un arrondi concave en surplomb. Sur la partie supérieure du méplat 14 fait saillie un bloc de butée 14A, dont une face de butée 14B se trouve dans le plan médian de la monture 1.

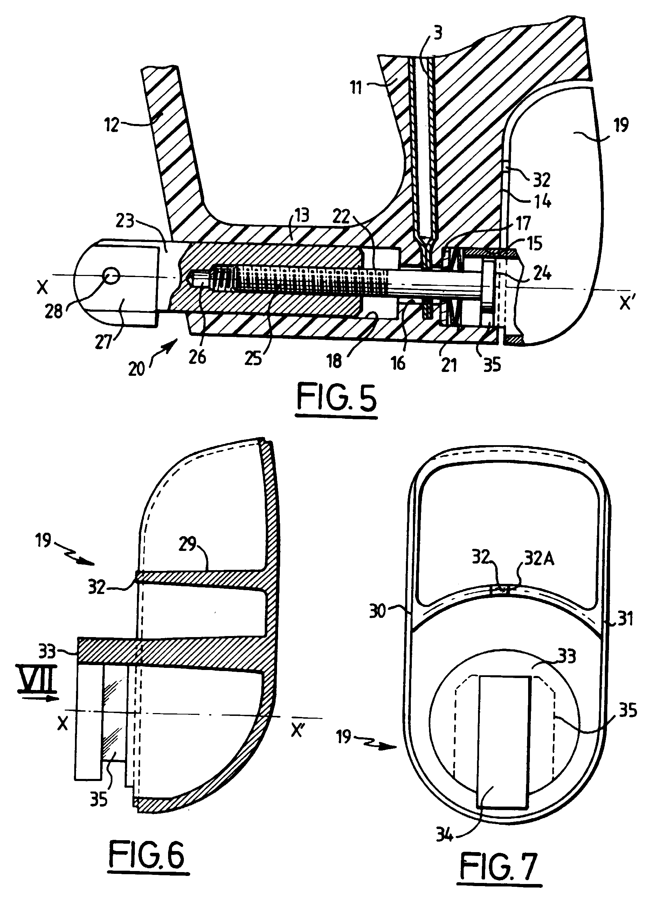

On voit sur les Figures 4 et 5 que la branche 13 de la poignée 4 est traversée selon l'axe X-X' par un alésage ayant trois diamètres différents. Le tronçon arrière 15 de cet alésage, à section circulaire, s'étend du méplat 14 jusqu'à un emplacement voisin de l'extrémité arrière de l'archet.

Le tronçon intermédiaire d'alésage 16, également à section circulaire, possède un diamètre réduit sensiblement égal à celui du trou de l'archet et s'étend de part et d'autre de ce trou. La réduction de diamètre entre les alésages 15 et 16 définit un épaulement arrière 17.

Le troisième tronçon d'alésage 18, à section carrée, s'étend vers l'avant sur le reste de la longueur de la branche 13 et débouche sur la face avant de la branche 12.

La Figure 5 montre le dispositif de mise en tension 5. Ce dispositif est constitué d'un organe de commande ou manivelle 19, d'un système vis-écrou 20 et d'un ressort taré 21.

Le système vis-écrou 20 se compose d'une vis de tension 22 et d'un coulisseau 23. La vis 22 a une tête 24 carrée à face droite et une tige 25 très longue par rapport à son diamètre, lequel est inférieur à celui du tronçon d'alésage 16. La tige 25 est filetée uniquement sur sa moitié avant.

Le coulisseau 23 a la forme générale d'un parallélépipède très allongé, à section carrée, conjuguée de celle du tronçon d'alésage 18. Ce coulisseau comporte un alésage axial taraudé borgne 26 s'étendant sur la majeure partie de sa longueur, débouchant à l'extrémité arrière du coulisseau. L'extrémité avant du coulisseau 23 présente une forme bombée et porte un méplat latéral 27 sur lequel fait saillie un ergot 28. L'extrémité de forme bombée du coulisseau 23 comporte une saillie inférieure adaptée pour que, lorsque le coulisseau est inséré dans le tronçon d'alésage 18, cette saillie affleure le plan inférieur de la branche 13 de la poignée 4.

Le ressort taré 21 est composé d'une rondelle plate et de deux rondelles Belleville superposées. Ces trois rondelles ont un diamètre extérieur sensiblement égal à celui du tronçon d'alésage 15 et un diamètre intérieur sensiblement égal à celui du corps 25 de la vis 22.

La manivelle 19 est décrite en regard des Figures 5 à 7. Cette manivelle a la forme d'une coquille ouverte vers l'avant, à paroi de faible épaisseur, par exemple en "Zamak". Cette coquille est de forme conjuguée de la partie inférieure évidée de la poignée 4 de manière à compléter cette poignée lorsque la manivelle 19 est en place dans cette partie évidée.

La manivelle 19 comporte une nervure supérieure 29 en arc de cercle (Figure 7), s'étendant d'un bord à l'autre des côtés latéraux 30 et 31 de la coquille et se terminant dans le plan de ces bords. Cette nervure 29 porte en saillie vers l'avant une butée 32 complémentaire de l'ergot 14A porté par le méplat 14 et dont la face de butée 32A se trouve dans le plan médian de la manivelle.

La partie inférieure intérieure de la coquille formant la manivelle 19 comporte un bossage cylindrique 33, d'axe X-X', dont le diamètre est égal à celui du tronçon d'alésage 15, et qui s'étend à partir du fond de la coquille jusqu'à faire saillie hors de cette coquille.

Sur toute la longueur de ce bossage 33 s'étend une rainure 34 en forme de U, d'axe X-X' et débouchant sur la partie inférieure de la coquille. La partie en saillie du bossage 33 comporte par ailleurs une encoche rectangulaire 35 perpendiculaire à l'axe X-X', débouchant vers le bas de la coquille et conjuguée de la tête 24 de la vis 22.

Le fonctionnement de cette monture de scie est expliqué en regard des Figures 1 et 5. Le mécanisme de mise en tension 5 est mis en place dans la poignée 4 en insérant d'abord la tête de vis 24 dans l'encoche 35 de la manivelle 19, puis en enfilant sur la vis, les deux rondelles Belleville superposées et la rondelle plate constituant le ressort 21, qui viennent en butée contre l'épaulement 17 lorsque l'on insère la tige 25 de la vis 22 dans le tronçon d'alésage 18 de la poignée 4, la manivelle 19 étant guidée par son bossage 33 dans le tronçon d'alésage 15. Le coulisseau 20 est ensuite inséré dans le tronçon d'alésage 18 et vissé sur la vis 22.

La lame de scie 2 est fixée sur les ergots du porte-lame avant 10 et du coulisseau 20. Cette lame est tendue jusqu'à une tension prédéterminée, en tournant la manivelle 19 dans le sens horaire, dès que le ressort 21 est pris en sandwich entre l'épaulement 17 et le bossage 33. Le coulisseau 20 avance dans le tronçon 18, en tendant la lame de scie, jusqu'à ce que la tension exercée sur la lame soit égale à la force d'élasticité des rondelles Belleville superposées. Les rondelles Belleville peuvent par exemple être tarées à 80 kg. L'espace entre l'épaulement 17 et la face en regard du bossage 33 diminue alors, et les faces de butée 14A et 32A entrent en contact, empêchant une rotation supplémentaire de la manivelle 19 et limitant ainsi la tension exercée sur la lame de scie. La manivelle emplit alors sensiblement l'évidement arrière de la poignée.

En utilisant des rondelles Belleville dont la course d'écrasement est nettement supérieure au pas de la vis 22, on garantit l'obtention de cette entrée en contact lorsque la tension prédéterminée correspondant au tarage de ces rondelles est obtenue.

La forme en contre-cintre de l'archet 3 de la monture de scie augmente la résistance à la déformation de cette monture lors de la mise en tension de la lame. Elle participe ainsi à l'obtention d'une tension prédéterminée précise de la lame. En outre, cette propriété permet de conserver pratiquement inchangé l'aspect général de la scie même pour des tensions de lame élevées. La section ovalisée illustrée à la Figure 3 participe également à l'obtention de ces résultats très avantageux.

Grâce à la longueur réglable de la vis 22 en prise dans le coulisseau 23, le dispositif de mise en tension 5 permet d'utiliser des lames de scie qui n'ont pas toutes le même entraxe, ce qui permet d'utiliser une gamme variée de lames de scie.

## Revendications

1. Monture de scie, du type comprenant un archet (3) solidaire d'une poignée arrière (4), un organe avant (10) d'accrochage de l'extrémité distale d'une lame (2), prévu à l'extrémité avant de la monture, un organe arrière (28) d'accrochage de l'extrémité proximale de la lame, prévu à l'extrémité arrière de la monture, la poignée (4) étant pourvue d'un mécanisme (5) de mise en tension limitée de la lame qui comporte un système vis-ecrou (20) manoeuvré par un organe de commande rotatif (19), un ressort taré (21) étant interposé entre l'organe de commande et une surface de réaction (17) de la poignée (4), caractérisée en ce qu'elle comprend des butées complémentaires (32A, 14A) portées respectivement par l'organe de commande (19) et par l'ensemble archet-poignée, adaptées pour arrêter la rotation de l'organe de commande rotatif (19) après une compression du ressort taré (21) sur une longueur prédéterminée pour obtenir une tension prédéterminée de la lame, indépendamment des tolérances de fabrication et dans une gamme substantielle d'entraxes de la lame.

2. Monture de scie selon la revendication 1, caractérisée en ce que le ressort taré (21) comprend au moins une rondelle élastique, par exemple une rondelle Belleville.

3. Monture de scie selon la revendication 1 ou 2, caractérisée en ce que les butées complémentaires (14A, 32A) comprennent deux butées adaptées pour immobiliser l'organe de commande (19) dans un évidement de forme conjuguée prévu dans l'extrémité arrière de la monture.

4. Monture de scie selon l'une quelconque des revendications 1 à 3, caractérisée en ce que la course maximale d'écrasement du ressort taré (21) est supérieure au pas du système vis-écrou (20).

5. Monture de scie selon l'une quelconque des revendications 1 à 4, caractérisée en ce que le système vis-écrou (20) comprend un coulisseau (23) guidé en translation dans un alésage ménagé dans la partie arrière de la monture.

6. Monture de scie selon l'une quelconque des revendications 1 à 5, caractérisée en ce que l'archet (3) présente, dans une partie intermédiaire de la monture, un cintrage inverse tournant sa concavité vers l'extérieur par rapport à la lame (2).

7. Monture de scie selon l'une quelconque des revendications 1 à 6, caractérisée en ce que l'archet (3) est d'une seule pièce et comporte une branche arrière (8) incorporée dans la poignée (4).

8. Monture de scie selon l'une quelconque des revendications 1 à 7, caractérisée en ce que l'archet (3) comprend une pièce tubulaire et métallique.

9. Monture de scie selon l'une quelconque des revendications 1 à 8, caractérisée en ce que ladite pièce présente, sur au moins une partie de sa longueur, une section allongée ayant sa plus grande dimension dans le plan médian de la monture.

10. Monture de scie selon l'une quelconque des revendications 7 à 9, caractérisée en ce que ladite pièce est enrobée d'une matière plastique (3A).

11. Scie à main comprenant une monture de scie selon l'une quelconque des revendications 1 à 10, et une lame (2) tendue entre lesdits organes avant (10) et arrière (28).

## Claims

1. Saw frame, of the type comprising a bow (3) joined to a rear handle (4), a front attachment member (10) for the distal end of a blade (2), provided at the front end of the frame, a rear attachment member (28) for the proximal end of the blade, provided at the rear end of the frame, the handle (4) being provided with a mechanism (5) for putting the blade under limited tension which comprises a screw and nut system (20) actuated by a rotatable control member (19), a calibrated spring (21) being interposed between the control member and a reaction surface (17) on the handle (4), characterised in that it has complementary abutments (32A, 14A) carried respectively by the control member (19) and by the handle/bow assembly, adapted to halt the rotation of the rotatable control member (19) after a compression of the calibrated spring (21) to a predetermined length in order to obtain a predetermined tension of the blade, independently of manufacturing tolerances and over a substantial range of inter-axial spacings of the blade.

2. Saw frame according to Claim 1, characterised in that the calibrated spring (21) comprises at least one resilient disc, for example a Belleville washer.

3. Saw frame according to claim 1 or 2, characterised in that the complementary abutments (14A, 32A) comprise two abutments adapted to locate the control member (19) in an opening of complementary shape provided in the rear end of the frame.

4. Saw frame according to one of claims 1 to 3, characterised in that the maximum range of collapse of the calibrated spring (21) is greater than the travel of the screw and nut system (20).

5. Saw frame according to one of claims 1 to 4, characterised in that the screw and nut system (20) comprises a slide (23) guided in translation in a bore provided in the rear part of the frame.

6. Saw frame according to one of claims 1 to 5, characterised in that the bow (3) has, in an intermediate part of the frame, an inverse concavity with its concave side facing away from the blade (2).

7. Saw frame according to one of claims 1 to 6, characterised in that the bow (3) is a single component and has a rear limb (8) incorporated in the handle (4).

8. Saw frame according to one of claims 1 to 7, characterised in that the bow (3) comprises a tubular metallic component.

9. Saw frame according to one of claims 1 to 8, characterised in that the said component has, over at least part of its length, an elongated cross-section having its greater dimension in the median plane of the frame.

10. Saw frame according to one of claims 7 to 9, characterised in that the said component is coated in a plastics material (3A).

11. Handsaw comprising a saw frame according to one of claims 1 to 10 and a blade (2) held between the said front (10) and rear (28) members.

## Patentansprüche

1. Sägenrahmen mit einem Bügel (3), der mit einem hinteren Griff (4) fest verbunden ist, einem am vorderen Ende des Rahmens vorgesehenen vorderen Organ (10) zum Einhängen des distalen Endes eines Blatts (2) und einem am hinteren Ende des Rahmens vorgesehenen hinteren Organ (28) zum Einhängen des proximalen Endes des Blatts, wobei der Griff (4) mit einem Mechanismus (5) zum begrenzten Spannen des Blatts versehen ist, der ein durch ein drehbares Betätigungsorgan (19) betätigtes Schrauben-Mutter-System (20) umfaßt, wobei zwischen das Betätigungsorgan und eine Reaktionsfläche (17) des Griffs (4) eine kalibrierte Feder (21) eingesetzt ist, dadurch gekennzeichnet, daß er ergänzende Anschläge (32A, 14A) aufweist, die von dem Betätigungsorgan (19) bzw. von der aus Bügel und Griff bestehenden Einheit getragen werden und die dafür ausgelegt sind, die Drehung des drehbaren Betätigungsorgans (19) nach einer Komprimierung der kalibrierten Feder (21) auf einer vorbestimmten Länge zu blockieren, um eine vorbestimmte Spannung des Blatts zu erhalten, und zwar unabhängig von den Herstellungstoleranzen und in einem beträchtlichen Bereich von Achsabständen des Blatts.

2. Sägenrahmen nach Anspruch 1, dadurch gekennzeichnet, daß die kalibrierte Feder (21) mindestens eine Federscheibe, beispielsweise eine Bellevillefeder, umfaßt.

3. Sägenrahmen nach Anspruch 1 oder 2, dadurch gekennzeichnet, daß die ergänzenden Anschläge (14A, 32A) aus zwei Anschlägen bestehen, die dafür ausgelegt sind, das Betätigungsorgan (19) in einer im hinteren Ende des Rahmens vorgesehenen Aussparung von ergänzender Form zu blockieren.

4. Sägenrahmen nach einem der Ansprüche 1 bis 3, dadurch gekennzeichnet, daß der maximale Weg der Stauchung der kalibrierten Feder (21) größer als die Steigung des Schrauben-Mutter-Systems (20) ist.

5. Sägenrahmen nach einem der Ansprüche 1 bis 4, dadurch gekennzeichnet, daß das Schrauben-Mutter-System (20) ein Gleitstück (23) aufweist, das in einer im hinteren Teil des Rahmens vorgesehenen Bohrung in Translation geführt wird.

6. Sägenrahmen nach einem der Ansprüche 1 bis 5, dadurch gekennzeichnet, daß der Bügel (3) in einem Mittelbereich des Rahmens eine umgekehrte Krümmung besitzt, deren Konkavität bezüglich des Blatts (2) nach außen gewandt ist.

7. Sägenrahmen nach einem der Ansprüche 1 bis 6, dadurch gekennzeichnet, daß der Bügel (3) einstückig ist und einen hinteren Schenkel (8) besitzt, der in den Griff (4) eingegliedert ist.

8. Sägenrahmen nach einem der Ansprüche 1 bis 7, dadurch gekennzeichnet, daß der Bügel (3) aus einem rohrförmigen Teil aus Metall besteht.

9. Sägenrahmen nach einem der Ansprüche 1 bis 8, dadurch gekennzeichnet, daß dieses Teil auf mindestens einem Teil seiner Länge einen langgestreckten Querschnitt aufweist, dessen größere Abmessung in der Mittelebene des Rahmens liegt.

10. Sägenrahmen nach einem der Ansprüche 7 bis 9, dadurch gekennzeichnet, daß dieses Teil mit einem Kunststoff (3A) umhüllt ist.

11. Handsäge mit einem Sägenrahmen nach einem der Ansprüche 1 bis 10 und einem Blatt (2), das zwischen dem vorderen Organ (10) und dem hinteren Organ (28) gespannt ist.
